# EUROPÄISCHE PATENTANMELDUNG

(11) **EP 2 679 845 A1**
(43) Veröffentlichungstag der Anmeldung: **01.01.2014**
(21) Anmeldenummer: 13173763.7
(22) Anmeldetag: 26.06.2013
(51) Int. Cl.: F16C 35/06, F16D 1/068, B23K 1/00

(54) **Verfahren zur Montage eines Lagerrings**

(30) Priorität: 29.06.2012 DE 102012211262
(71) Anmelder: Aktiebolaget SKF, 41550 Göteborg (SE)
(72) Erfinder: Haeussinger, Michael, 97072 Würzburg (DE); Olschewski, Armin, 97422 Schweinfurt (DE); Stubenrauch, Arno, 97491 Aidhausen (DE)
(74) Vertreter: Schonecke, Mitja

(57) **Zusammenfassung**

Die Erfindung betrifft ein Verfahren zur Montage eines Lagerrings (1) in eine Aufnahmebohrung (2) eines Gehäuses (3). Um bei ungünstiger Montagesituation einen festen Sitz der Lagerrings im Gehäuse zu erreichen, sieht das vorgeschlagene Verfahren die Schritte vor: a) Herstellen des Lagerrings (1) und des Gehäuses (3), so dass zwischen dem Außenumfang (4) des Lagerrings (1) und der Aufnahmebohrung (2) des Gehäuses (3) unter Berücksichtigung einer auf den Außenumfang (4) des Lagerrings (1) und/oder auf die Oberfläche der Aufnahmebohrung (2) aufzubringenden Beschichtung (5) definierter radialer Dicke (d) eine Press- oder Übergangspassung vorliegt; b) Versehen des Außenumfangs (4) des Lagerrings (1) und/oder des Innenumfangs der Aufnahmebohrung (2) zumindest teilweise mit einer Beschichtung (5) aus einem unter Wärmeeinwirkung schmelzenden Material mit einer definierten radialen Dicke (d); c) Erzeugen einer relativen Bewegung zwischen dem Lagerring (1) und der Aufnahmebohrung (2), wobei durch die bei der Bewegung erzeugte Wärme das Material der Beschichtung (5) aufschmelzen gelassen wird; d) Erhärtenlassen des Materials der Beschichtung (5) durch Abkühlen.

## Beschreibung

Die Erfindung betrifft ein Verfahren zur Montage eines Lagerrings in eine Aufnahmebohrung eines Gehäuses oder zur Montage eines Lagerrings auf eine Welle.

Bei der Montage eines Lagerrings in ein Gehäuse - Analoges gilt für Montage eines Lagerings auf einer Welle - muss dafür Sorge getragen werden, dass im Betrieb des Lagers sowohl ein Wandern in Achsrichtung als auch in Umfangsrichtung unterbleibt, da derartige Bewegungen allmählich zur Zerstörung der Lagerkomponenten führen können.

Demgemäß sind mannigfaltige Maßnahmen bekannt, um besagte Bewegungen zu verhindern. So sind Sprengringe gebräuchlich, um die axiale Beweglichkeit des Lagerrings relativ zum Gehäuse zu begrenzen bzw. zu unterbinden. Auch sind vielfältige Lösungen bekannt, mit denen ein Wandern des Lagerrings in der Gehäusebohrung verhindert werden soll.

Probleme entstehen, wenn für diejenigen Komponenten, mit denen die Beweglichkeit des Lagerings relativ zum Gehäuse unterbunden werden soll, kein hinreichender Raum besteht oder die Montageabfolge es nicht erlaubt, besagte Komponenten zu montieren. Beispielsweise sei die Lagerung von Planetenrädern eines Planetengetriebes einer Windkraftanlage genannt, wo es aufgrund der Bauart schwierig bzw. unmöglich ist, klassische Komponenten zur Verhinderung der Relativbewegung zwischen Lagerring und Gehäusebohrung einzusetzen.

Der Erfindung liegt die **Aufgabe** zugrunde, ein Verfahren zur Montage eines Lagerrings in eine Aufnahmebohrung eines Gehäuses oder zur Montage eines Lagerrings auf eine Welle vorzuschlagen, das auch ohne separate Komponenten, wie beispielsweise Sprengringe, sicherstellt, dass nach Abschluss der Montage eine Relativbewegung zwischen Lagerring und Gehäuse bzw. Welle nicht mehr stattfinden kann. Demgemäß soll auch bei einer ungünstigen Montagesituation ein fester Sitz des Lagerrings im Gehäuse bzw. auf der Welle erreicht werden.

Die **Lösung** dieser Aufgabe durch die Erfindung ist dadurch gekennzeichnet, dass das Verfahren im Falle der Festlegung eines Lagerrings in einer Gehäusebohrung die Schritte aufweist:
a) Herstellen des Lagerrings und des Gehäuses, so dass zwischen dem Außenumfang des Lagerrings und der Aufnahmebohrung des Gehäuses unter Berücksichtigung einer auf den Außenumfang des Lagerrings und/oder auf die Oberfläche der Aufnahmebohrung aufzubringenden Beschichtung definierter radialer Dicke eine Press- oder Übergangspassung vorliegt;
b) Versehen des Außenumfangs des Lagerrings und/oder des Innenumfangs der Aufnahmebohrung zumindest teilweise mit einer Beschichtung aus einem unter Wärmeeinwirkung schmelzenden Material mit einer definierten radialen Dicke;
c) Erzeugen einer relativen Bewegung zwischen dem Lagerring und der Aufnahmebohrung, wobei durch die bei der Bewegung erzeugte Wärme das Material der Beschichtung aufschmelzen gelassen wird;
d) Erhärtenlassen des Materials der Beschichtung durch Abkühlen.

Das Verfahren weist im Falle der Festlegung eines Lagerrings auf einer Welle die Schritte auf:
a) Herstellen des Lagerrings und der Welle, so dass zwischen dem Innenumfang des Lagerrings und der Welle unter Berücksichtigung einer auf den Innenumfang des Lagerrings und/oder auf die Oberfläche der Welle aufzubringenden Beschichtung definierter radialer Dicke eine Press- oder Übergangspassung vorliegt;
b) Versehen des Innenumfangs des Lagerrings und/oder des Außenumfangs der Welle zumindest teilweise mit einer Beschichtung aus einem unter Wärmeeinwirkung schmelzenden Material mit einer definierten radialen Dicke;
c) Erzeugen einer relativen Bewegung zwischen dem Lagerring und der Welle, wobei durch die bei der Bewegung erzeugte Wärme das Material der Beschichtung aufschmelzen gelassen wird;
d) Erhärtenlassen des Materials der Beschichtung durch Abkühlen.

Das Erzeugen der relativen Bewegung gemäß obigem Schritt c) ist dabei bevorzugt ein axiales Aufschieben des Lagerrings in die Aufnahmebohrung oder auf die Welle.

Möglich ist es aber auch, dass besagte relative Bewegung ein Wandern des Lagerrings in Umfangsrichtung in der Aufnahmebohrung oder auf der Welle ist. Demgemäß wird also die aufgebrachte Beschichtung genutzt, um bei einem ersten Wandern des Lagerrings in Umfangsrichtung den stoffschlüssigen Verbund herzustellen und den Lagerring damit endgültig zu fixieren.

Das Material der Beschichtung hat bevorzugt einen Schmelzpunkt von maximal 240 °C, vorzugsweise von maximal 180 °C. Das Material der Beschichtung ist bevorzugt ein metallisches Lot.

Das Erhärtenlassen des Materials der Beschichtung gemäß obigem Schritt d) erfolgt bevorzugt nach der Durchführung eines axialen Aufschiebens des Lagerrings in das Gehäuse oder auf die Welle nach Erreichen der endgültigen gewünschten Relativposition zwischen Lagerring und Gehäuse bzw. Welle.

Der Lagerring und das Gehäuse bzw. die Welle sind zumindest in eine axiale Bewegungsrichtung bevorzugt frei von separaten Mitteln zur Begrenzung der axialen Beweglichkeit zwischen Lagerring und Gehäuse bzw. Welle. Genauso sind der Lagerring und das Gehäuse bzw. die Welle bevorzugt frei von separaten Mitteln zur Verhinderung eines Wanderns des Lagerrings in Umfangsrichtung.

Das Verfahren wird bevorzugt eingesetzt bei der Montage eines Lagerrings in ein Planetenrad des Planetengetriebes einer Windkraftanlage.

Die Erfindung schlägt also eine stoffschlüssige Verbindung zwischen Lagerring und Gehäuse bzw. Welle vor, die bevorzugt beim Fügen selber erzeugt wird. Zumindest einer der Fügepartner ist hierzu mit der genannten Beschichtung versehen, die beim Verpressen durch die Reibkräfte in den flüssigen Zustand versetzt wird, so dass sich die beiden Fügepartner verbinden können.

Durch ein gegebenenfalls auftretendes anfängliches Wandern des Lagerrings wird die Beschichtung weiter verfestigt, so dass der stoffschlüssige Verbund stabil ist.

Ebenfalls ist es denkbar, dass der stoffschlüssige Verbund nicht durch den Fügevorgang hergestellt wird, sondern durch anfängliches Drehen des Lagerrings in seiner Aufnahmebohrung.

In vorteilhafter Weise wird ein Wandern des Lagerrings im Gehäuse vermieden. Probleme mit axialen Zwangskräften können behoben werden. Die Bordbruchgefahr wird somit vorteilhaft ebenfalls reduziert. Es kann weiterhin kein undefiniertes Fressen des Außenrings im Gehäuse erfolgen.

In der Zeichnung ist ein Ausführungsbeispiel der Erfindung dargestellt. Es zeigen:
- Fig. 1: schematisch ein Lager mit einem Lageraußenring und ein Gehäuse, in dessen Aufnahmebohrung das Lager zu montieren ist,
- Fig. 2: den Prozess des Einpressens des Lagerrings in das Gehäuse und
- Fig. 3: die Einzelheit "X" gemäß Fig. 2.

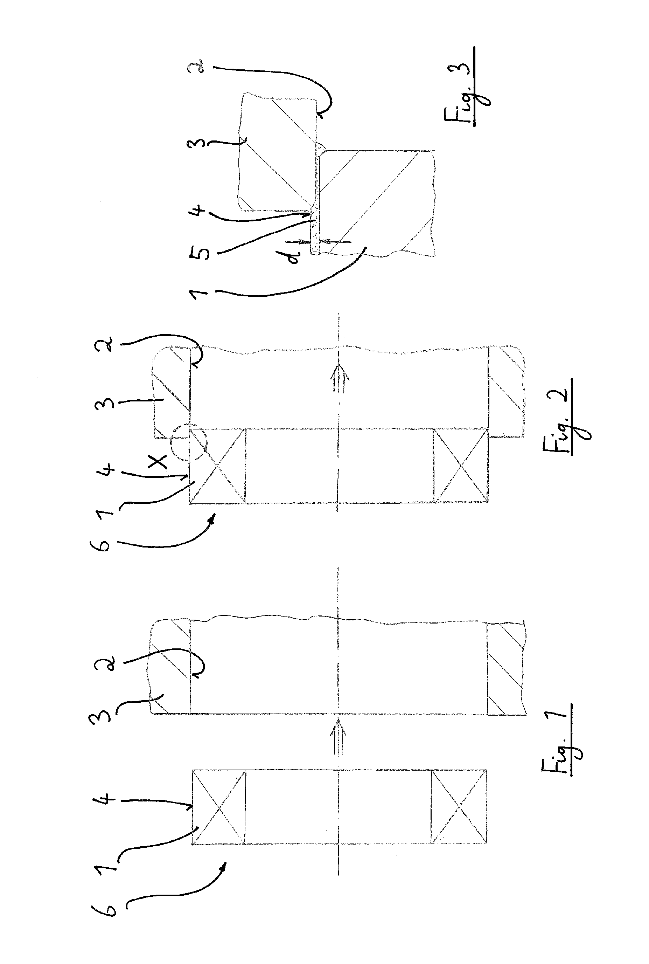

In Fig. 1 ist ein Wälzlager 6 mit einem Lagerring 1, nämlich einem Lageraußenring, zu erkennen, das in ein Gehäuse 3 zu montieren ist. Das Gehäuse 3 weist hierfür eine Aufnahmebohrung 2 auf, die zylindrisch ausgebildet ist und damit kongruent zur zylindrischen Form des Außenrumfangs 4 des Lagerrings 1.

Im montierten Zustand soll der Lagerring 1 ohne weitere Maßnahmen sowohl axial als auch in Umfangsrichtung fest in der Aufnahmebohrung 2 des Gehäuses 3 sitzen. Dies wird generell erreicht, indem zwischen dem Außenumfang 4 des Lagerrings 1 und der Aufnahmebohrung 2 des Gehäuses 3 eine Presspassung vorliegt. Der Lagerring 1 wird zwecks Montage in Richtung des Pfeils in Fig. 1 axial in die Aufnahmebohrung 2 eingepresst, um einen sicheren Sitz des Lagerrings 1 zu gewährleisten. Der Presssitz als solcher reicht in vielen Fällen aber nicht aus, um zuverlässig eine relative axiale Bewegung bzw. eine solche in Umfangsrichtung zu verhindern.

Vorliegend werden allerdings keine als solche im Stand der Technik bekannten Maßnahmen, wie Sprengringe etc., eingesetzt, um dies zu erreichen. Vielmehr wird wie folgt vorgegangen:

Der Außenumfang 4 des Lagerrings 1 wird mit einer Beschichtung 5 versehen, wie sie in der vergrößerten Darstellung gemäß Fig. 3 zu sehen ist. Die Beschichtung 5 besteht aus einem Lot, d. h. aus einem Material, das unter Wärmeeinwirkung bei bereits relativ niedrigen Temperaturen schmilzt, bevorzugt bereits bei Temperaturen unter 180 °C. Die Beschichtung 5 hat eine Dicke d von beispielsweise zwischen 50 µm und 250 µm Dicke.

Die genannte Presspassung ermittelt sich bevorzugt unter Berücksichtigung der auf den Lagerrings 1 aufgebrachten Beschichtung.

Wird nun der Lagerring 1 axial in die Aufnahmebohrung 4 eingepresst - dies ist in Fig. 2 dargestellt -, entsteht durch die Reibung zwischen der Beschichtung 5 und der Oberfläche der Aufnahmebohrung 2 hinreichend Wärme, die das Material der Beschichtung 5 jedenfalls lokal aufschmelzen lässt.

In Fig. 3 ist dies illustriert. Zu sehen ist, dass das Material der Beschichtung 5 einer erheblichen Scherung ausgesetzt ist, so dass es zu besagtem Aufschmelzen kommt.

Ist die axiale Relativposition zwischen Lagerring 1 und Gehäuse 3 erreicht, kühlt das lokal aufgeschmolzene Material der Beschichtung 5 wieder ab und stellt hiermit einen stoffschlüssigen Verbund zwischen Lagerring 1 und Gehäuse 3 her. Demgemäß wird auch ohne Sprengringe oder Lösungen zur Verhinderung des Wanderns des Lagerrings 1 in Umfangsrichtung zuverlässig ein fester Sitz des Lagerrings 1 im Gehäuse 3 gewährleistet.

### Bezugszeichenliste

- 1: Lagerring
- 2: Aufnahmebohrung
- 3: Gehäuse
- 4: Außenumfang des Lagerrings
- 5: Beschichtung
- 6: Wälzlager
- d: Dicke der Beschichtung

## Patentansprüche

1. Verfahren zur Montage eines Lagerrings (1) in eine Aufnahmebohrung (2) eines Gehäuses (3), das die Schritte aufweist:
a) Herstellen des Lagerrings (1) und des Gehäuses (3), so dass zwischen dem Außenumfang (4) des Lagerrings (1) und der Aufnahmebohrung (2) des Gehäuses (3) unter Berücksichtigung einer auf den Außenumfang (4) des Lagerrings (1) und/oder auf die Oberfläche der Aufnahmebohrung (2) aufzubringenden Beschichtung (5) definierter radialer Dicke (d) eine Press- oder Übergangspassung vorliegt;
b) Versehen des Außenumfangs (4) des Lagerrings (1) und/oder des Innenumfangs der Aufnahmebohrung (2) zumindest teilweise mit einer Beschichtung (5) aus einem unter Wärmeeinwirkung schmelzenden Material mit einer definierten radialen Dicke (d);
c) Erzeugen einer relativen Bewegung zwischen dem Lagerring (1) und der Aufnahmebohrung (2), wobei durch die bei der Bewegung erzeugte Wärme das Material der Beschichtung (5) aufschmelzen gelassen wird;
d) Erhärtenlassen des Materials der Beschichtung (5) durch Abkühlen.

2. Verfahren zur Montage eines Lagerrings (1) auf eine Welle, das die Schritte aufweist:
a) Herstellen des Lagerrings (1) und der Welle, so dass zwischen dem Innenumfang des Lagerrings (1) und der Welle unter Berücksichtigung einer auf den Innenumfang des Lagerrings (1) und/oder auf die Oberfläche der Welle aufzubringenden Beschichtung (5) definierter radialer Dicke (d) eine Press- oder Übergangspassung vorliegt;
b) Versehen des Innenumfangs des Lagerrings (1) und/oder des Außenumfangs der Welle zumindest teilweise mit einer Beschichtung (5) aus einem unter Wärmeeinwirkung schmelzenden Material mit einer definierten radialen Dicke (d);
c) Erzeugen einer relativen Bewegung zwischen dem Lagerring (1) und der Welle, wobei durch die bei der Bewegung erzeugte Wärme das Material der Beschichtung (5) aufschmelzen gelassen wird;
d) Erhärtenlassen des Materials der Beschichtung (5) durch Abkühlen.

3. Verfahren nach Anspruch 1 oder 2, **dadurch gekennzeichnet, dass** das Erzeugen der relativen Bewegung gemäß Schritt c) von Anspruch 1 oder 2 ein axiales Aufschieben des Lagerrings (1) in die Aufnahmebohrung (2) oder auf die Welle ist.

4. Verfahren nach Anspruch 1 oder 2, **dadurch gekennzeichnet, dass** das Erzeugen der relativen Bewegung gemäß Schritt c) von Anspruch 1 oder 2 ein Wandern des Lagerrings in Umfangsrichtung in der Aufnahmebohrung (2) oder auf der Welle ist.

5. Verfahren nach einem der Ansprüche 1 bis 4, **dadurch gekennzeichnet, dass** das Material der Beschichtung (5) einen Schmelzpunkt von maximal 240 °C aufweist, vorzugsweise von maximal 180 °C.

6. Verfahren nach einem der Ansprüche 1 bis 5, **dadurch gekennzeichnet, dass** das Material der Beschichtung (5) ein Lot ist.

7. Verfahren nach einem der Ansprüche 1 bis 6, **dadurch gekennzeichnet, dass** das Erhärtenlassen des Materials der Beschichtung (5) gemäß Schritt d) von Anspruch 1 oder 2 nach der Durchführung eines axialen Aufschiebens des Lagerrings (1) in das Gehäuse (3) oder auf die Welle nach Erreichen der endgültigen gewünschten Relativposition zwischen Lagerring (1) und Gehäuse (3) bzw. Welle erfolgt.

8. Verfahren nach einem der Ansprüche 1 bis 7, **dadurch gekennzeichnet, dass** der Lagerring (1) und das Gehäuse (3) bzw. die Welle zumindest in eine axiale Bewegungsrichtung frei von separaten Mitteln zur Begrenzung der axialen Beweglichkeit zwischen Lagerring (1) und Gehäuse (3) bzw. Welle sind.

9. Verfahren nach einem der Ansprüche 1 bis 8, **dadurch gekennzeichnet, dass** der Lagerring (1) und das Gehäuse (3) bzw. die Welle frei von separaten Mitteln zur Verhinderung eines Wanderns des Lagerrings (1) in Umfangsrichtung sind.

10. Verfahren nach einem der Ansprüche 1 bis 9, **dadurch gekennzeichnet, dass** es eingesetzt wird bei der Montage eines Lagerrings in ein Planetenrad des Planetengetriebes einer Windkraftanlage.
